Europäisches Patentamt

European Patent Office

Office européen des brevets

(19)

(11) Veröffentlichungsnummer: **0 070 561**
A2

(12) **EUROPÄISCHE PATENTANMELDUNG**

(21) Anmeldenummer: **82106535.6**

(22) Anmeldetag: **20.07.82**

(51) Int. Cl.³: **F 16 L 37/12**

(30) Priorität: **22.07.81 CH 4775/81**

(43) Veröffentlichungstag der Anmeldung: **26.01.83**
**Patentblatt 83/4**

(84) Benannte Vertragsstaaten: **AT DE FR GB IT**

(71) Anmelder: **GEORG FISCHER AKTIENGESELLSCHAFT,**
**Mühlentalstrasse 105, CH-8201 Schaffhausen (CH)**

(72) Erfinder: **Hurter, Fritz, Bocksrietstrasse 108,**
**CH-8200 Schaffhausen (CH)**

(54) **Vorrichtung zum festen flüssigkeits- und gasdichten Verbinden von zwei Rohren.**

(57) Bei der Vorrichtung zum festen, flüssigkeits- und gasdichten Verbinden von zwei Rohren (1, 2) ist das äussere Rohr (2) mit einer Muffe versehen, und in getrennten Räumen auf dessen Innenseite eine Dichtung (6) und Befestigungskörper (4, 5, 13) angeordnet. Die Verbindungsvorrichtung besteht aus einem Keil (5), der mit einem U- (4) oder plattenförmigen Körper (13) mit mindestens einer innen angeordneten, scharfen Kante (7) versehen ist, die in das Innenrohr (1) eingedrückt wird und somit eine Verschiebung der Rohre (1, 2) in der Achsrichtung (8) verhindert. Der Keil (5) ist derart angeordnet, dass er aus der Klemmstellung entfernt werden kann.

ACTORUM AG

GEORG FISCHER AKTIENGESELLSCHAFT,     8201 Schaffhausen

2261/FIT / 15.07.1981 / Lg-ps /

Vorrichtung zum festen flüssigkeits- und gasdichten Verbinden
von zwei Rohren

Die Erfindung betrifft eine Vorrichtung gemäss dem Oberbegriff
des Anspruches 1.
Das Verbinden von Rohren ist in vielen Fällen, zum Beispiel
aus Platz- oder Lichtmangel, eine mühsame Angelegenheit, die
zudem zeitraubend ist. Infolgedessen wurden in letzter Zeit
Bestrebungen unternommen, um das Verbinden zu erleichtern.
Eine derartige Ausführung ist in der DE - AS 28 35 274 beschrieben bei der das innere Rohr mittels eines Körpers mit zwei
gebogenen scharfen Kanten festgeklemmt und gehalten wird.
Ein Nachteil dieser Ausführung besteht darin, dass die Bewegungslänge dieser Kanten in radialer Richtung in der Hauptsache
durch den kreisförmigen Verlauf der Umfangswandung der
Rohre bestimmt wird. Bei der vorgesehenen Drehbewegung können
die kreisförmigen Kanten das innere Rohr empfindlich verletzen,
wenn der Kantenhalter mittels eines Gewindes bewegt wird,
weil dann dieser Halter zu weit eingeschraubt werden kann.

Es ist somit die Aufgabe der vorliegenden Erfindung eine
Vorrichtung zum festen, flüssigkeits- und gasdichten Verbinden
von zwei Rohren zu schaffen, die eine dauerhafte und insbesondere für das Innenrohr eine ungefährliche Verbindung gewährleistet.

Ferner soll die Verbindung einfach und an schwer zugänglichen
Stellen leicht herstellbar sein. Wenn erforderlich soll die
Verbindung leicht lösbar sein.

Diese Aufgabe ist erfindungsgemäss mit der Lehre gemäss dem
gekennzeichneten Teil des Anspruches 1 gelöst.

Ausführungsformen dieser Lehre sind in den weiteren, abhängigen
Ansprüchen umschrieben.

Die beschriebene Lösung zeichnet sich durch einfache Montage,
auch an schwer zugänglichen Stellen, aus. Dabei ist die Rohrverbindung gas- und flüssigkeitsdicht und hat eine lange Lebensdauer. Eine Beschädigung des inneren Rohres ist praktisch
ausgeschlossen. Die zur Herstellung der Rohrverbindung benötigten Teile sind preisgünstig herstellbar.

Die beschriebene Rohrverbindung ist insbesondere für Metallrohre vorgesehen, kann aber auch für Kunststoffrohre verwendet werden.

Nachfolgend werden Ausführungsbeispiele der erfindungsgemässen
Vorrichtung anhand der Zeichnung näher erläutert.
Es zeigen:

Fig. 1    einen Querschnitt durch eine Rohrverbindung,

Fig. 2    einen Längsschnitt durch die Rohrverbindung nach
          Fig. 1,

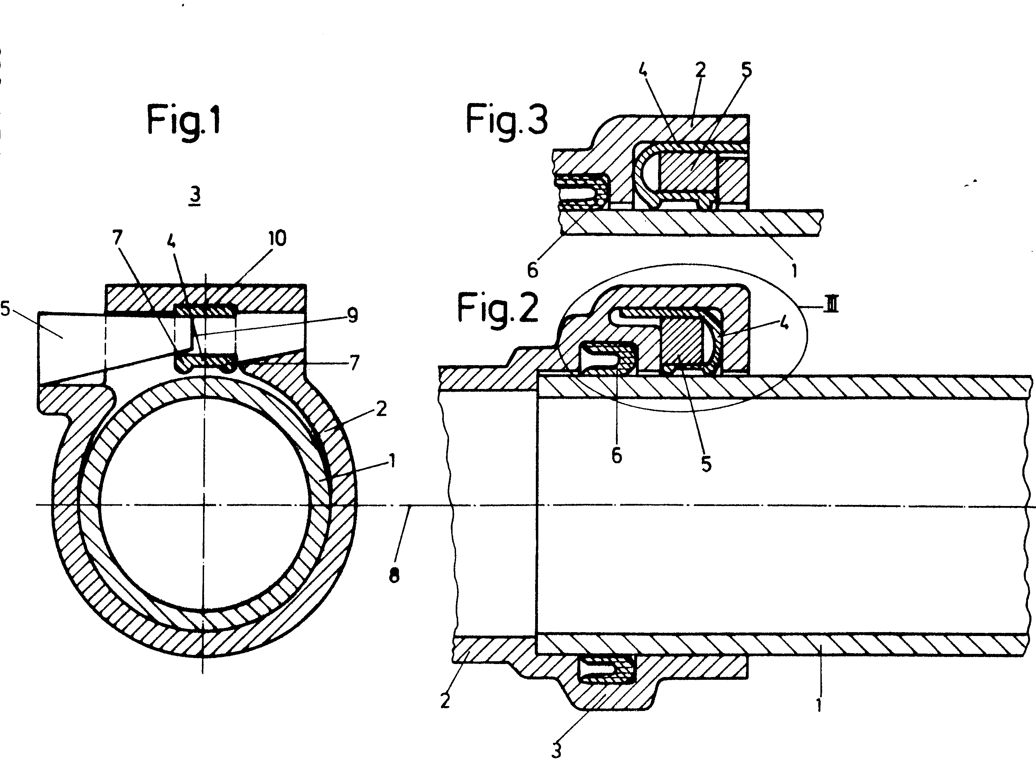

Fig. 3    eine Variante zum Ausschnitt III in Fig. 2,

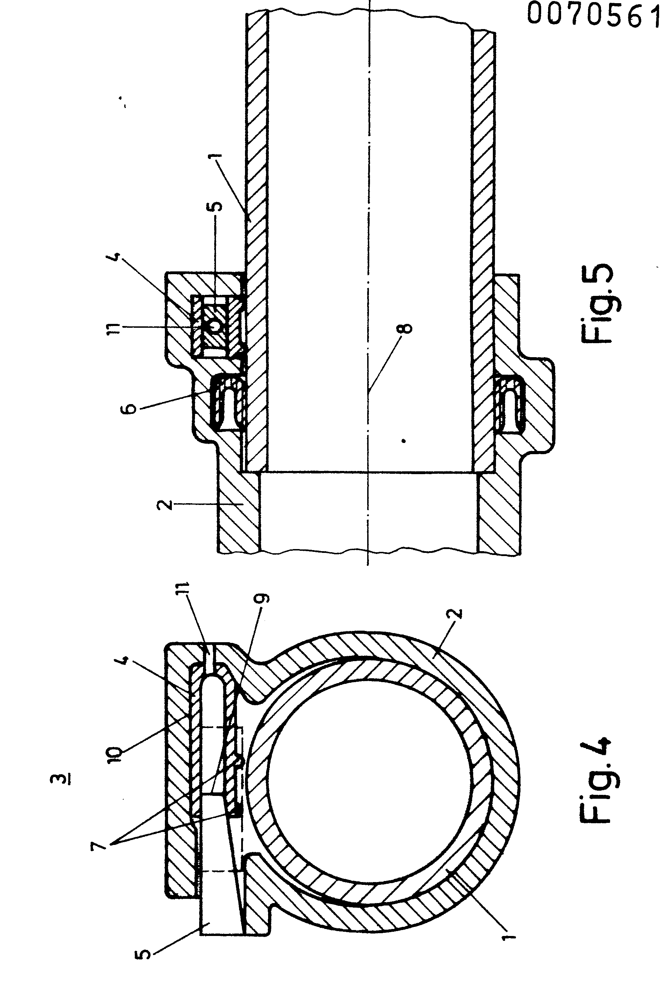

Fig. 4    eine erste Variante zu Fig. 1,

Fig. 5    einen Längsschnitt durch Fig. 4,

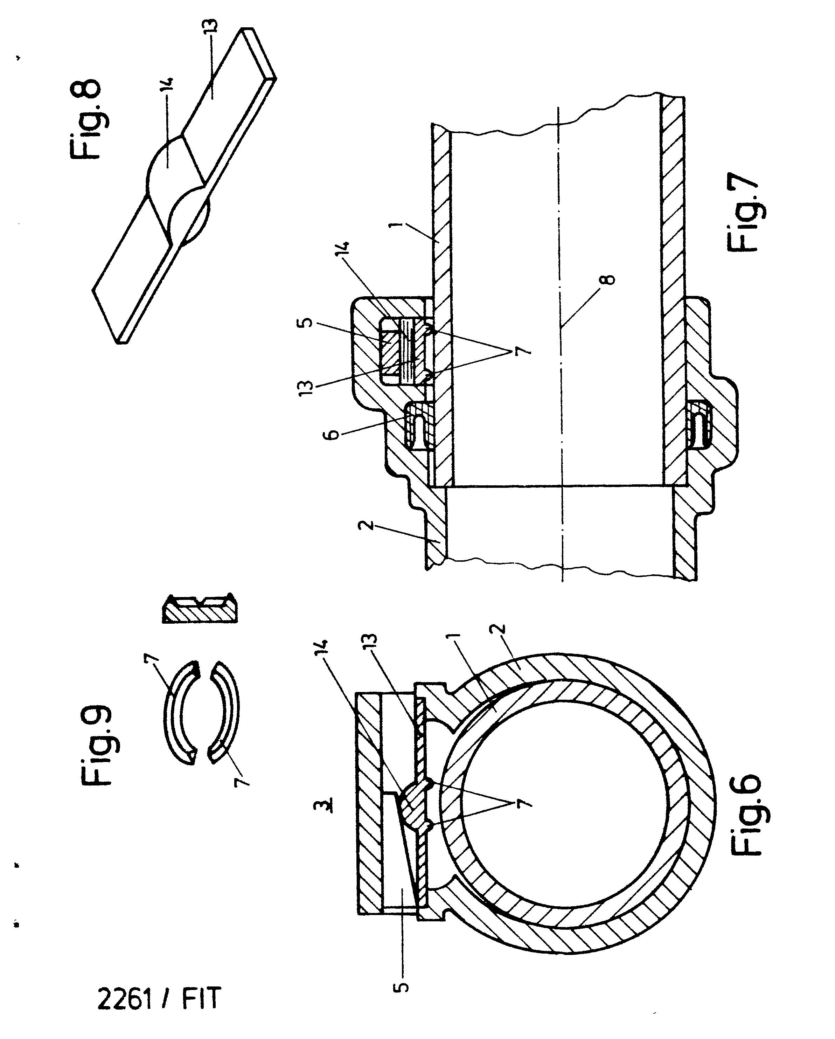

Fig. 6    eine zweite Variante zu Fig. 1,

Fig. 7    einen Längsschnitt durch Fig. 6,

0070561

Fig. 8    eine schrägbildliche Darstellung des biegsamen
          Gliedes in Fig. 6, und

Fig. 9    eine radiale Drauf- und Seitenansicht einer Ausführungsform der scharfen Kanten.

In Fig. 1 ist ein Innenrohr 1 und ein Aussenrohr 2 dargestellt,
das in einem Bereich 3 des Umfanges zur Aufnahme eines biegsamen Gliedes 4 und eines Keils 5 erweitert ist. Beabstandet
(Fig. 2) von und in einem separatem Raum von diesen beiden
Teilen 4,5 befindet sich eine versenkt eingesetzte Dichtung
6, welche die beiden Rohre 1 , 2 gegeneinander abdichtet.
Zur Herstellung der Rohrverbindung wird der Keil 5 zum Beispiel
mittels eines Hammers oder eines hydraulischen oder pneumatischen
Gerätes in das biegsame Glied 4 derart eingedrückt, dass es
sich  erweitert, wodurch sich die scharfen Kanten 7 in die
Aussenfläche des Innenrohres 1 festhaken. Die Kanten 7 haben
vorzugsweise ein von der Rohrachse 8 abweichenden Verlauf,
damit ein möglichst grosser Widerstand gegen eine Verschiebung
der beiden Rohre 1, 2 relativ zueinander entsteht. Um diesen
Widerstand zu gewährleisten, können eine oder mehrere Kanten
7 kreisförmig verlaufen, wie dies zum Beispiel in Fig. 9 gezeigt ist. Zum Entfernen des Keils 5 kann an seinem inneren
Ende 9 ein Werkzeug angesetzt und er dadurch ausgedrückt werden.

Anstelle der in Fig. 2 gezeigten Ausführung kann das Glied 4
in der Weise in der Mitte angeordnet werden, wie es in Fig. 3
gezeigt ist. Das Glied 4 kann, wie auch in den folgenden
Figuren, aus Federstahl bestehen, was aber für die Funktion
der Rohrverbindung nicht erforderlich ist. Das Glied 4 liegt
in einer Mulde 10 im Inneren des Aussenrohres 2, wobei es darin
durch einen Reibsitz gehalten werden kann, damit das Glied 4
bei der Montage nicht herausfällt.

Bei der Ausführung nach den Fig. 4 und 5 handelt es sich um
eine Variante zu den Fig. 1 bis 3. Der Unterschied zwischen
den beiden Figurengruppen besteht in der Anordnung des Gliedes
4 und der Form der Mulde 10. Zudem ist ein Loch 11 sowohl in der Wandung des Aussenrohres 2 als auch im Glied 4 vorgesehen,
damit das Innere Ende 9 des Keils 5 zu dessen Entfernung mit
einem Stab oder dergleichen erreichbar ist. Als Stab kann zum
Beispiel ein Schraubenzieher verwendet werden. Die Löcher 11
können aber weggelassen werden, sofern es nicht notwendig oder
erwünscht ist, die Rohrverbindung zu lösen.

In den Figuren 6 bis 8 ist eine Rohrverbindung dargestellt,
bei der das Glied 13, statt U-förmig, plattenförmig ausgebildet
ist. Die Platte 13 ist an der Anlagefläche für den Keil 5 mit
einem Auflagekörper 14 versehen, gegen den der Keil 5 anliegt.
Beim Hineindrücken des Keils 5 werden die scharfen Kanten 7 in
die Aussenfläche des Innenrohres 1 hineingedrückt. Die Platte 11
ist dabei derart bemessen, dass sie sich unter der Einwirkung
des Keils 5 radial nach innen biegt.

In Fig. 8 ist die Platte 11 schrägbildlich dargestellt. Die
beiden scharfen Kanten 7 sind in Fig. 9 gezeigt. Diese
Kanten 7 sind in der Regel einstückig mit dem Glied 4 oder
Platte 13 verbunden. Die Kanten 7 können aber auch zum Beispiel
formschlüssig mit dem Glied 4 oder der Platte 13 verbunden sein,
sofern es gewährleistet ist, dass sie sich nicht längs der
Achse 8 der Rohre 1, 2 verschieben.

In Fig. 9 haben die beiden Kanten 7 zusammen eine etwa ellipsenartige Form. Sie können aber auch andere Formen haben, die eine
Verschiebung der beiden Rohre 1, 2 relativ zueinander verhindern.
Damit eine solche Verschiebung verhindert wird, sollte das Glied
4 oder die Platte 13 nur unwesentlich schmäler als die Länge
des Raumes sein in dem sie angeordnet sind. (Siehe Fig. 2,
5, und 7).

Die beschriebene Rohrverbindung ist einfach und preisgünstig
und schnell herstellbar. Die Rohrverbindung ist ferner über
lange Zeit flüssigkeits- und gasdicht. Ein weiterer Vorteil
besteht darin, dass die Rohrverbindung an schwer zugänglichen
Stellen leicht zu montieren ist. Ein zu weites Einschlagen des Keils kann durch mechanische, hydraulische oder pneumatische, auf einen Höchstdruck eingestellte Mittel, verhindert
werden. Die 'Rohrverbindung ist platzsparend, so dass das eine
Rohr ein Teil eines T-stückes sein kann.

P a t e n t a n s p r ü c h e

2261/FIT

1. Vorrichtung zum festen, flüssigkeits- und gasdichten Verbinden von zwei Rohren, von denen das äussere mit einer
Muffe versehen ist, in der jeweils ein Raum zur Aufnahme
einer Dichtung und Befestigungskörper vorhanden ist, dadurch
gekennzeichnet, dass die Befestigungskörper (4, 5, 13) einen
Keil (5) und ein biegsames Glied (4, 13) mit mindestens
einer scharfen Kante (7) einschliesst, die mittels des Keils
(5) in die Aussenfläche des inneren Rohres (1) zum Festhalten desselben einpressbar ist.

2. Vorrichtung nach Anspruch 1, dadurch gekennzeichnet, dass
das Glied (4) U-förmig ausgebildet ist, und dass der Keil
(5) zwischen den Schenkeln des Gliedes (4) einpressbar ist.

3. Vorrichtung nach Anspruch 1, dadurch gekennzeichnet, dass
das Glied (13) flach ausgebildet und mit einer Erhöhung (14)
zur Keilanlage versehen ist.

4. Vorrichtung nach Anspruch 1, dadurch gekennzeichnet, dass
die Kante (7) gebogen oder teilkreisförmig ist.

5. Vorrichtung nach Anspruch 1, dadurch gekennzeichnet, dass
zwei Kanten (7) vorhanden sind.

6. Vorrichtung nach Anspruch 5, dadurch gekennzeichnet, dass die beiden Kanten (7) als Teile einer Ellipse geformt sind.

7. Vorrichtung nach Anspruch 1, dadurch gekennzeichnet, dass das Glied (4, 13) aus Federmaterial besteht.

8. Vorrichtung nach Anspruch 1, dadurch gekennzeichnet, dass der Keil (5) zum lösen der Verbindung herausnehmbar ist.

9. Vorrichtung nach Anspruch 1, dadurch gekennzeichnet, dass das eine Rohr (1, 2) ein Teilstück ist.

0070561

Fig.1

Fig.2

Fig.3

2261 / FIT

3

Fig. 4

Fig. 5

Fig.9

Fig.8

14

13

Fig.6

3

14

13

5

7

1

2

7

Fig.7

2

6

13

5

14

1

7

8